(19) Europäisches Patentamt / European Patent Office / Office européen des brevets

(11) **EP 4 439 738 A1**

(12) **EUROPEAN PATENT APPLICATION**
published in accordance with Art. 153(4) EPC

(43) Date of publication:
**02.10.2024 Bulletin 2024/40**

(21) Application number: **23903812.8**

(22) Date of filing: **23.11.2023**

(51) International Patent Classification (IPC):
$H01M\ 4/70^{(2006.01)}$    $H01M\ 4/134^{(2010.01)}$
$H01M\ 4/38^{(2006.01)}$    $H01M\ 4/66^{(2006.01)}$
$H01M\ 10/052^{(2010.01)}$    $H01M\ 4/02^{(2006.01)}$

(52) Cooperative Patent Classification (CPC):
H01M 4/02; H01M 4/134; H01M 4/38; H01M 4/66;
H01M 4/70; H01M 10/052; Y02E 60/10

(86) International application number:
**PCT/KR2023/018950**

(87) International publication number:
**WO 2024/128609 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.12.2022 KR 20220176315**

(71) Applicant: **LG Energy Solution, Ltd.
Seoul 07335 (KR)**

(72) Inventors:
 • **LEE, Jong Yoon
  Daejeon 34122 (KR)**

 • **HONG, Sukhyun
  Daejeon 34122 (KR)**
 • **HAN, Suenghoon
  Daejeon 34122 (KR)**
 • **HONG, Kyungsik
  Daejeon 34122 (KR)**
 • **NOH, Jaekyo
  Daejeon 34122 (KR)**
 • **KIM, Hyeon Jin
  Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **NEGATIVE ELECTRODE FOR LITHIUM SECONDARY BATTERY AND LITHIUM SECONDARY BATTERY COMPRISING SAME**

(57) The present invention relates to a negative electrode for a lithium secondary battery and a lithium secondary battery comprising the same.

[FIG. 5]

**Description**

[Technical Field]

The present application claims the benefit of priority to Korean Patent Application No. 10-2022-0176315, filed December 15, 2022, the content of which is incorporated herein by reference in its entirety.
The present invention relates to a negative electrode for a lithium secondary battery and a lithium secondary battery comprising the same.

[Background Technologies]

With the rapid development of the electronics, communications, and computer industries, energy storage technology is expanding to camcorders, cell phones, laptops, PCs, and even electric vehicles. This has led to the development of high-performance secondary batteries that are lightweight, long-lasting, and highly reliable.
Lithium secondary batteries are gaining traction as batteries that meet these needs.
A lithium secondary battery having a laminated or wound structure of an electrode assembly includes a positive electrode and a negative electrode, and a separator interposed therebetween. The electrode assembly is embedded in a battery case and an electrolyte is injected therein. The lithium secondary battery produces electrical energy by an oxidation/reduction reaction when lithium ions are introduced/removed from a positive electrode and a negative electrode.
Among lithium secondary batteries, a lithium-sulfur battery, which uses sulfur-based materials as the positive-electrode active material, is a battery that has recently gained attention. Sulfur, the primary material for positive-electrode active materials, has the advantages of being very abundant, non-toxic, and having a low weight per atom. In addition, the theoretical discharge capacity of the Li-Sulfur battery is 1,675mAh/g-sulfur, and the theoretical energy density is 2,600Wh/kg, which is higher than the theoretical energy density of other battery systems currently being studied (Ni-MH battery: 450 Wh/kg, Li-FeS battery: 480 Wh/kg, Li-MnO$_2$ battery: 1,000 Wh/kg, Na-S battery: 800 Wh/kg), making them the most promising batteries being developed to date.

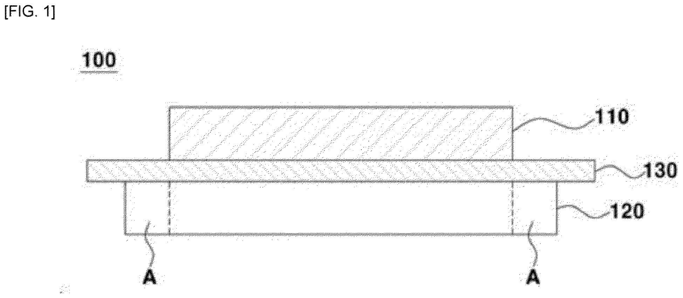

FIG. 1 is a cross-sectional view of a conventional lithium secondary battery 100. Referring to FIG. 1, a separator 130 is interposed between a positive electrode 110 and a negative electrode 120, in which the size of the negative electrode 120 is larger than the size of the positive electrode 110, and the negative electrode 120 is located in a region that is alighned with the positive electrode 110, so that the negative electrode 120 and the positive electrode 110 are in contact with each other by way of the separator 130 interposed therebetween. Since the size of the negative electrode 120 is larger than the size of the positive electrode 110, there is an area A on the negative electrode 120 that is not in contact with the positive electrode 110. The negative electrode 120 may be made of lithium metal.
The charging and discharging reaction of the lithium secondary battery 100 takes place only in the region where the negative electrode 120 and the positive electrode 110 contact each other by way of the separator 130 interposed therebetween. When the charging and discharging reactions of the lithium secondary battery 100 are repeatedly performed, the porosity of the lithium metal that is the negative electrode 120 gradually increases, and the rigidity becomes weaker. Accordingly, the lithium metal can become detached in the area A that is not in contact with the positive electrode 110, which corresponds to the edges of the negative electrode 120. The detached lithium metal pieces may move freely inside the pouch cell, and when an external force is applied to the lithium secondary battery 100, the detached lithium metal pieces may cause a short circuit of the lithium secondary battery 100.
Therefore, there is a need for research on lithium secondary batteries that can solve the above problems.

[Prior Art Literature]

[Patent Document]

Korean Laid-Open Publication No. 100-2017-0124075

[Detailed Description of the Invention]

[Technical Problem]

In order to solve the above problem, the present inventors conducted various studies and confirmed that, by changing the structure of the negative electrode for a lithium secondary battery, it is possible to prevent the lithium metal from being detached in the area of the negative electrode that is not in contact with the positive electrode by way of a separator, and completed the present invention.
Accordingly, it is an object of the present invention to provide a negative electrode for a lithium secondary battery capable of preventing detachment of lithium metal.

Further, it is an object of the present invention to provide a lithium secondary battery comprising such a negative electrode for the lithium secondary battery .

[Technical Solution]

To achieve the above objectives, the present invention provides a negative electrode for a lithium secondary battery, comprising: a first layer comprising a lithium metal sheet; a second layer formed on a top surface of the first layer and including a lithium metal sheet and a negative electrode collector surrounding an outer peripheral surface of the lithium metal sheet; and a third layer formed on a top surface of the second layer and including a lithium metal sheet.

In an embodiment of the present invention, the negative electrode collector may have same or different edge widths in vertical and horizontal directions from a top, bottom, left or right direction.

In an embodiment of the present invention, the negative electrode collector may have an area of from 10 to 30% of an area of the second layer.

In an embodiment of the present invention, a surface of the negative electrode collector that abuts the lithium metal sheet of the first to third layer may comprise an undulated structure.

In an embodiment of the present invention, the negative electrode collector may have a thickness of 1 to 10 $\mu$m.

In an embodiment of the present invention, the negative electrode collector may have a thickness of 1 or more and less than 5 $\mu$m.

In an embodiment of the present invention, the first and third layers may have a same size.

In an embodiment of the present invention, a thickness of the negative electrode collector and a thickness of the lithium metal sheet of the second layer may be same.

In an embodiment of the present invention, the first layer may have a thickness of 10 to 50 $\mu$m, the third layer may have a thickness of 10 to 50 $\mu$m, and the negative electrode for a lithium secondary battery may have a thickness of 21 to 110 $\mu$m.

In an embodiment of the present invention, the negative electrode for the lithium secondary battery may be a negative electrode for a lithium-sulfur battery.

The present invention also provides a lithium secondary battery, comprising a positive electrode; a negative electrode; a separator interposed between the positive and negative electrodes; and an electrolyte, wherein a size of the negative electrode is larger than a size of the positive electrode, and wherein the negative electrode is the aforementioned negative electrode.

In an embodiment of the present invention, a size of the lithium metal sheet of the second layer of the negative electrode may be less than or equal to the size of the positive electrode.

In an embodiment of the present invention, the lithium secondary battery may be a lithium-sulfur battery.

[Advantageous Effects]

The negative electrode for the lithium secondary battery of the present invention can prevent the lithium metal from being detached in the area not in contact with the positive electrode with a separator interposed therebetween, minimize the loss of energy density, and improve safety.

[Brief Description of Drawings]

FIG. 1 is a cross-sectional view of a conventional lithium secondary battery .

FIG. 2 is a side view of a negative electrode for a lithium secondary battery according to an embodiment of the present invention.

FIG. 3 is a cross-sectional view of a negative electrode for a lithium secondary battery according to an embodiment of the present invention.

FIG. 4 is a top view of a second layer of a negative electrode for a lithium secondary battery, according to an embodiment of the present invention.

FIG. 5 is a cross-sectional view of a lithium secondary battery according to an embodiment of the present invention.

[Mode for Practicing the Invention]

The present invention is hereinafter described in detail with reference to the accompanying drawings so as to facilitate practice by one having ordinary skill in the art to which the present invention belongs. However, the present invention may be implemented in many different forms and is not limited to the embodiments described herein.

In order to clearly illustrate the present invention, parts not pertinent to the description have been omitted, and identical or similar components are designated by the same reference numerals throughout the specification.

Furthermore, the terms and words used in this specification and the claims of the patent are not to be construed in their ordinary or dictionary sense, but are to be construed with a meaning and concept consistent with the technical idea of the present invention, based on the principle that the inventor may properly define the concept of a term to best describe his invention.

Hereinafter, embodiments will be described in detail with reference to the accompanying drawings. However, the present invention can be implemented in many different forms and is not limited to the embodiments described herein.

The present invention provides a negative electrode 120 for a lithium secondary battery, comprising: a first layer 121comprising a lithium metal sheet; a second layer 122 formed on a top surface of the first layer and including a lithium metal sheet 124 and a negative electrode collector 125 surrounding an outer peripheral surface of the lithium metal sheet; and a third layer 123 formed on a top surface of the second layer and including a lithium metal sheet.

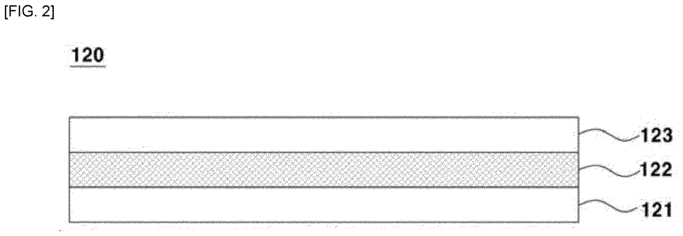

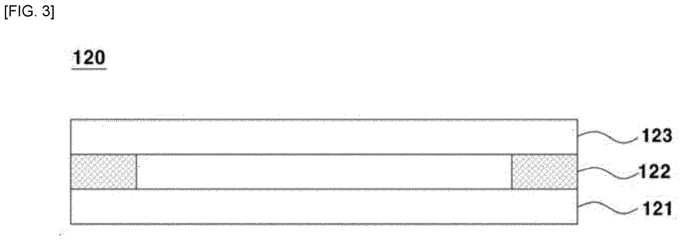

FIG. 2 is a side view of a negative electrode 120 for a lithium secondary battery according to an embodiment of the present invention, and FIG. 3 is a cross-sectional view of the negative electrode 120 for a lithium secondary battery according to an embodiment of the present invention.

Referring to FIGS. 2 and 3, the negative electrode 120 for a lithium secondary battery according to the present invention includes first to third layers 121, 122, 123, which are stacked from top to bottom.

The first layer 121 and the third layer 123 may each comprise a lithium metal sheet, preferably comprising only a lithium metal sheet.

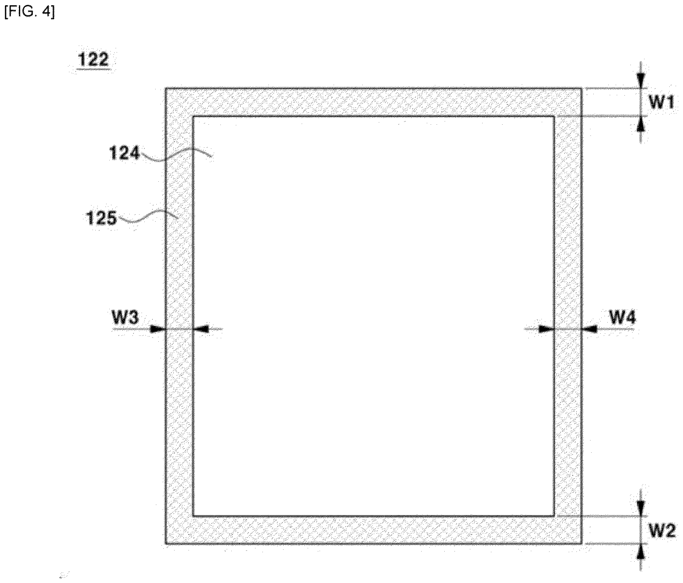

FIG. 4 is a top view of the second layer 122 of the negative electrode 120 for a lithium secondary battery, according to an embodiment of the present invention.

Referring to FIG. 4, the second layer 122 may comprise a lithium metal sheet 124 and a negative electrode collector 125 surrounding an outer peripheral surface of the lithium metal sheet 124. That is, the negative electrode collector 125 may be hollow in the center, with the lithium metal sheet 124 located in the hollow space.

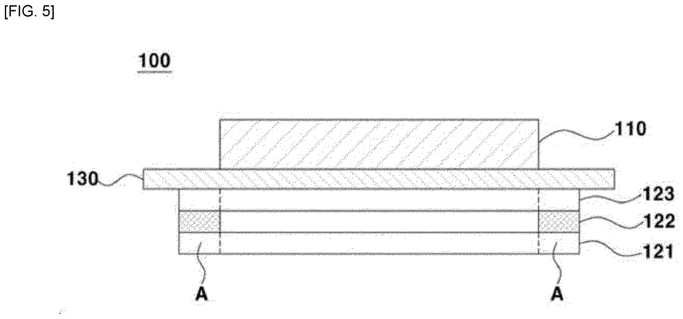

Therefore, referring to FIG. 2, in a side view of the negative electrode 120 for a lithium secondary battery according to an embodiment of the present invention, only the negative electrode collector 125 may be shown in the second layer 122, and, referring to FIG. 5, in a side view of the negative electrode 120 for a lithium secondary battery according to an embodiment of the present invention, both the negative electrode collector 125 and the lithium metal sheet 124 may be shown in the second layer 122.

The area of the negative electrode collector 125 is present only on the outer peripheral surface of the lithium metal sheet 124, such that it is smaller than the area of the lithium metal sheet 124, and can preferably have an area of 10 to 30%, more preferably 10 to 20%, of the area of the second layer 122.

Furthermore, the negative electrode collector 125 may have the same or different edge widths in vertical and horizontal directions from a top, bottom, left or right direction.. When the widths of collector in the vertical and horizontal directions of the negative electrode collector 125 are W1, W2, W3, and W4, respectively, they may be the same or different from each other, and are preferably defined by any of the following Equations 1 to 3.

[Equation 1]

$$W1 = W2 = W3 = W4$$

[Equation 2]

$$W1 \neq W2 \neq W3 \neq W4$$

[Equation 3]

$$(W1 = W2) \neq (W3 = W4)$$

In the above Equations 1 to 3, W1 is the vertical width of the upper edge, W2 is the vertical width of the lower edge, W3 is the horizontal width of the left edge, and W4 is the horizontal width of the right edge.

Preferably, the edge width of the negative electrode collector 125 may be as shown in Equation 1 above.

The thickness of the negative electrode collector 125 may be between 1 and 10 $\mu$m, preferably 1 $\mu$m or more and less than 5 $\mu$m. Since a thickness of less than 1 $\mu$m is an excessively thin thickness, it is not possible to fabricate a thickness of the negative electrode collector 125 of less than 1 $\mu$m, and, since a thickness of more than 10 $\mu$m may result in a heavy weight of the negative electrode 120 for the lithium secondary battery, thereby reducing the energy density of the lithium secondary battery 100.

The thickness of the lithium metal sheet 124 and the negative electrode collector 125 forming the second layer 122 may be the same. If the thickness of the lithium metal sheet 124 is thinner than the thickness of the negative electrode collector 125, then the lithium metal sheets of the first layer 121 and the third layer 123 may only contact the negative electrode collector 125 of the second layer 122, and not the lithium metal sheet 124, creating a void. Therefore, in the lithium secondary battery 100 including the negative electrode 120, the negative electrode 120 may not contribute to the generation of the capacitance of the lithium secondary battery 100, and as a result, the overall energy density of the lithium secondary battery 100 may decrease. Additionally, if the thickness of the lithium metal sheet 124 is thicker than the thickness of the negative electrode collector 125, the lithium metal sheets of the first layer 121 and the third layer 123 may only contact the lithium metal sheet 124 of the second layer 122, and not the negative electrode collector 125, creating a void and potentially reducing the conductivity of the negative electrode collector 125.

The fabrication of the second layer 122 may be accomplished by disposing a sheet of lithium metal on one or both sides of the negative electrode collector 125 and rolling it, although not limited thereto in the present invention.

The first to third layers 121, 122, 123 may be of the same size.

Furthermore, the negative electrode collector 125 may comprise an undulated structure on the surface abutting the lithium metal sheets of the first to third layers 121, 122, 123.

The undulation may be formed regularly or irregularly, for example, the undulation may be formed in the form of polygonal columns protruding or retracted from the surface. More specifically, the undulation may be formed in the form of protruding or retracted serrations.

Specifically, the bottom surface of the negative electrode collector 125 contacts the top surface of the lithium metal sheet of the first layer 121, so that the bottom surface of the negative electrode collector 125 may have an undulated structure. Furthermore, since the top surface of the negative electrode collector 125 is in contact with the bottom surface of the lithium metal sheet of the third layer 123, the top surface of the negative electrode collector 125 may have an undulated structure. Also, since the lithium metal sheet 124 of the second layer 122 is located on the inner side of the negative electrode collector 125, the inner circumferential surface of the negative electrode collector 125 in contact therewith may have an undulated structure.

Due to the undulated structure of the surface of the negative electrode current collector 125 that contacts the lithium metal sheets of the first to third layers 121, 122, 123, it is possible to increase the adhesion strength with the lithium metal sheets. Additionally, it can reduce the weight of the negative electrode 120 used in lithium secondary batteries.

The negative electrode collector 125 is not particularly limited as long as it has a high conductivity without causing chemical changes in the lithium secondary battery 100. For example, copper, stainless steel, aluminum, nickel, titanium, palladium, calcined carbon, copper or stainless steel which is surface treated with carbon, nickel, silver, etc., aluminum-cadmium alloys, and the like may be used.

The thickness of the first layer 121 may be from 10 to 50 $\mu$m, and the thickness of the third layer may be from 10 to 50 $\mu$m. Furthermore, the thickness of the negative electrode 120 for the lithium secondary battery may be 21 to 110 $\mu$m, preferably 21 $\mu$m or more and less than 105 $\mu$m.

The negative electrode 120 for a lithium secondary battery may be fabricated by disposing the first layer 121 on the bottom surface of the second layer 122, disposing the third layer 123 on the upper surface of the second layer 122, and rolling the same, but the present invention is not particularly limited thereto. Alternatively, the negative electrode 120 for a lithium secondary battery may be fabricated by placing lithium metal sheets on both sides of the negative electrode collector 125 and rolling the same. At this time, the lithium metal sheets 124 are introduced inside the negative electrode collector 125 to form the second layer 122, and the lithium metal sheets that cannot be introduced and remain are present on the upper and the lower surfaces of the second layer 122. The lithium metal sheet located on the bottom surface may be the first layer 121, and the lithium metal sheet located on the top surface may be the third layer 123.

The negative electrode 120 for a lithium secondary battery according to an embodiment of the present invention may be a negative electrode for a lithium-sulfur battery.

The present invention is directed to a lithium secondary battery 100, comprising: a positive electrode 110; a negative electrode 120; and a separator 130 interposed between the positive and negative electrodes, wherein the size of the negative electrode 120 is larger than the size of the positive electrode 110, and the negative electrode 120 is the aforementioned negative electrode 120 according to an embodiment of the present invention.

FIG. 5 is a cross-sectional view of the lithium secondary battery 100 according to an embodiment of the present invention.

Referring to FIG. 5, the lithium secondary battery 100 according to the present invention comprises the positive electrode 110, the negative electrode 120, and a separator interposed between the positive electrode 110 and the negative electrode 120.

The negative electrode 120 and the positive electrode 110 may be located at regions corresponding to each other.

Further, since the size of the negative electrode 120 is larger than the size of the positive electrode 110, the negative electrode 120 may have a region A that is not in contact with the positive electrode 110 and a region in contact with the positive electrode 110. The region in contact with the positive electrode 110 means that the positive electrode 110 and the negative electrode 120 are not in direct contact, but are in contact with the separator 130 disposed therebetween.

Here, the size of the lithium metal sheet 124 of the second layer 122 of the negative electrode 120 may be less than or equal to the size of the positive electrode 110.

The positive electrode 110 may be a positive-electrode collector (not shown) to which a positive-electrode active material is applied, in which the positive-electrode active material may comprise sulfur. Specifically, the sulfur may be at least one selected from a group consisting of inorganic sulfur ($S_8$), Li-$S_n$ (n≥1), organic sulfur compounds, and carbon-sulfur polymers [$(C_2S_x)_n$, x=2.5 to 50, n≥2], and preferably inorganic sulfur (Ss). Further, the positive-electrode active material may be a sulfur-carbon composite which comprises porous carbon material and sulfur on at least some of the inner and outer surfaces of the porous carbon material.

Thus, the lithium secondary battery 100 according to an embodiment of the present invention may be a lithium-sulfur battery.

The lithium secondary battery 100 according to an embodiment of the present invention solves the problem of detachment of lithium metal occurring in conventional lithium secondary batteries. In detail, the negative electrode 120 for a lithium secondary battery according to an embodiment of the present invention includes the lithium metal sheet 124 and the negative electrode collector 125 surrounding an outer peripheral surface of the lithium metal sheet 124 in the second layer 122. In the conventional lithium secondary battery 100, the porosity of the lithium metal gradually increases when charging and discharging reactions are repeatedly performed, and as the stiffness weakens, the detachment of the lithium metal proceeds from the edge of the negative electrode 120, that is, the region (A) where the negative electrode 120 does not contact the positive electrode 110. The negative electrode 120 for the lithium secondary battery according to an embodiment of the present invention, on the other hand, includes the negative electrode collector 125 in the second layer 122, the detachment of the lithium metal can be prevented by the negative electrode collector 125 even if the rigidity of the lithium metal becomes weaker with repeated charging and discharging. Thus, the lithium secondary battery 100 according to an embodiment of the present invention can minimize the loss of energy density while securing safety. Due to repeated charging and discharging, detachment of lithium metal may occur at the edges of the first layer 121 and the third layer 123 of the negative electrode 120 for the lithium secondary battery, but due to the negative electrode collector 125 of the second layer 122, the bonding between the lithium metal sheets of the first and third layers can be maintained, thereby solving the same problem as in the prior art.

On the other hand, in the case of a negative electrode having lithium metal sheets laminated to the entire area of the sheet-shaped negative electrode collector, the weight is heavy and may cause a loss of energy density of the lithium secondary battery. Furthermore, in the case of the negative electrode comprising solely the second layer 122 of the present invention, the thickness of the second layer 122 of the present invention is required to be thicker than the thickness of the second layer 122 of the present invention because only the second layer 122 is required to be used as a negative electrode, and therefore, the weight may be heavier than the negative electrode 120 for the lithium secondary battery of the present invention. Therefore, the negative electrode 120 for the lithium secondary battery according to an embodiment of the present invention may be more advantageous in terms of energy density.

While the above has described in detail a preferred embodiment of the present invention, the scope of the present invention is not limited thereto, and various modifications and improvements by those skilled in the art utilizing the basic concepts of the present invention as defined in the following claims are also within the scope of the present invention.

[Explanation of Reference Numerals]

| | | | |
|---|---|---|---|
| 100: | Lithium secondary battery | 110: | Positive electrode |
| 120: | Negative electrode | 121: | First layer |
| 122: | Second layer | 123: | Third layer |
| 124: | Lithium metal sheet | 125: | Negative electrode collector |
| 130: | Separator | | |

**Claims**

1. A negative electrode for a lithium secondary battery, comprising:

   a first layer comprising a lithium metal sheet;
   a second layer formed on a top surface of the first layer and including a lithium metal sheet and a negative electrode collector surrounding an outer peripheral surface of the lithium metal sheet; and
   a third layer formed on a top surface of the second layer and including a lithium metal sheet.

2. The negative electrode for the lithium secondary battery according to claim 1, wherein the negative electrode collector has the same or different edge widths in vertical and horizontal directions from a top, bottom, left or right direction.

3. The negative electrode for the lithium secondary battery according to claim 1, wherein the negative electrode collector has an area of from 10 to 30% of an area of the second layer.

4. The negative electrode for the lithium secondary battery according to claim 1, wherein a surface of the negative electrode collector that abuts the lithium metal sheet of the first to third layer comprises an undulated structure.

5. The negative electrode for the lithium secondary battery according to claim 1, wherein the negative electrode collector has a thickness of 1 to 10 $\mu$m.

6. The negative electrode for the lithium secondary battery according to claim 5, wherein the negative electrode collector has a thickness of 1 or more and less than 5 $\mu$m.

7. The negative electrode for the lithium secondary battery according to claim 1, wherein the first and third layers have a same size.

8. The negative electrode for the lithium secondary battery according to claim 1, wherein a thickness of the negative electrode collector and a thickness of the lithium metal sheet of the second layer are same.

9. The negative electrode for the lithium secondary battery according to claim 1, wherein the first layer has a thickness of 10 to 50 $\mu$m, the third layer has a thickness of 10 to 50 $\mu$m, and the negative electrode for a lithium secondary battery has a thickness of 21 to 110 $\mu$m.

10. The negative electrode for the lithium secondary battery according to claim 1, wherein the negative electrode for the lithium secondary battery is a negative electrode for a lithium-sulfur battery.

11. A lithium secondary battery, comprising:

    a positive electrode;
    a negative electrode;
    a separator interposed between the positive and negative electrodes; and an electrolyte,
    wherein a size of the negative electrode is larger than a size of the positive electrode, and
    wherein the negative electrode is the negative electrode of any one of claims 1 to 10.

12. The lithium secondary battery according to claim 11, wherein a size of the lithium metal sheet of the second layer of the negative electrode is less than or equal to the size of the positive electrode.

13. The lithium secondary battery according to claim 11, wherein the lithium secondary battery is a lithium-sulfur battery.

[FIG. 1]

100

110

130

120

A                                        A

[FIG. 2]

**120**

123

122

121

[FIG. 3]

**120**

123

122

121

[FIG. 4]

[FIG. 5]

<table>
<tr><td colspan="2">INTERNATIONAL SEARCH REPORT</td><td>International application No.<br>**PCT/KR2023/018950**</td></tr>
</table>

**A.    CLASSIFICATION OF SUBJECT MATTER**

**H01M 4/70**(2006.01)i; **H01M 4/134**(2010.01)i; **H01M 4/38**(2006.01)i; **H01M 4/66**(2006.01)i; **H01M 10/052**(2010.01)i; **H01M 4/02**(2006.01)i

According to International Patent Classification (IPC) or to both national classification and IPC

**B.    FIELDS SEARCHED**

Minimum documentation searched (classification system followed by classification symbols)

H01M 4/70(2006.01); H01M 10/04(2006.01); H01M 10/0566(2010.01); H01M 12/08(2006.01); H01M 4/13(2010.01); H01M 4/72(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 리튬 금속 시트(lithium metal sheet), 음극 집전체(anode current collector)

**C.    DOCUMENTS CONSIDERED TO BE RELEVANT**

| Category* | Citation of document, with indication, where appropriate, of the relevant passages | Relevant to claim No. |
|---|---|---|
| A | KR 10-1976174 B1 (LG CHEM, LTD.) 09 May 2019 (2019-05-09)<br>See paragraphs [0022], [0031], [0041] and [0044]-[0045]; claims 1 and 15; and figures 1-3. | 1-13 |
| A | KR 10-2014-0104152 A (SK INNOVATION CO., LTD.) 28 August 2014 (2014-08-28)<br>See paragraph [0069]; claims 1 and 10; and figures 3-4. | 1-13 |
| A | JP 7117658 B2 (PANASONIC INTELLECTUAL PROPERTY MANAGEMENT CO., LTD.) 15 August 2022 (2022-08-15)<br>See entire document. | 1-13 |
| A | KR 10-2014-0005075 A (ELECTRONICS AND TELECOMMUNICATIONS RESEARCH INSTITUTE) 14 January 2014 (2014-01-14)<br>See entire document. | 1-13 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 February 2024** | **28 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/018950** |

| C. | DOCUMENTS CONSIDERED TO BE RELEVANT | | |
| --- | --- | --- | --- |
| Category* | Citation of document, with indication, where appropriate, of the relevant passages | | Relevant to claim No. |
| DA | KR 10-2017-0124075 A (SAMSUNG ELECTRONICS CO., LTD. et al.) 09 November 2017 (2017-11-09)<br>See entire document. | | 1-13 |

Form PCT/ISA/210 (second sheet) (July 2022)

<div align="center">

**INTERNATIONAL SEARCH REPORT**
Information on patent family members

</div>

| International application No.
PCT/KR2023/018950 |
|---|

| Patent document cited in search report | | | Publication date (day/month/year) | Patent family member(s) | | | Publication date (day/month/year) |
|---|---|---|---|---|---|---|---|
| KR | 10-1976174 | B1 | 09 May 2019 | CN | 108028413 | A | 11 May 2018 |
| | | | | CN | 108028413 | B | 30 July 2021 |
| | | | | EP | 3312926 | A1 | 25 April 2018 |
| | | | | EP | 3312926 | A4 | 26 September 2018 |
| | | | | JP | 2018-520493 | A | 26 July 2018 |
| | | | | JP | 6765683 | B2 | 07 October 2020 |
| | | | | KR | 10-2017-0099748 | A | 01 September 2017 |
| | | | | US | 11024886 | B2 | 01 June 2021 |
| | | | | US | 2018-0212277 | A1 | 26 July 2018 |
| KR | 10-2014-0104152 | A | 28 August 2014 | JP | 2014-160656 | A | 04 September 2014 |
| | | | | JP | 6081937 | B2 | 15 February 2017 |
| | | | | KR | 10-1561188 | B1 | 16 October 2015 |
| | | | | US | 2014-0234732 | A1 | 21 August 2014 |
| | | | | US | 2016-0380320 | A1 | 29 December 2016 |
| | | | | US | 9461302 | B2 | 04 October 2016 |
| | | | | US | 9947977 | B2 | 17 April 2018 |
| JP | 7117658 | B2 | 15 August 2022 | CN | 108933278 | A | 04 December 2018 |
| | | | | CN | 108933278 | B | 27 June 2023 |
| | | | | EP | 3410516 | A1 | 05 December 2018 |
| | | | | EP | 3410516 | B1 | 01 April 2020 |
| | | | | JP | 2018-206757 | A | 27 December 2018 |
| | | | | US | 10840538 | B2 | 17 November 2020 |
| | | | | US | 2018-0342754 | A1 | 29 November 2018 |
| KR | 10-2014-0005075 | A | 14 January 2014 | KR | 10-2429876 | B1 | 05 August 2022 |
| KR | 10-2017-0124075 | A | 09 November 2017 | CN | 107394115 | A | 24 November 2017 |
| | | | | CN | 107394115 | B | 29 March 2022 |
| | | | | EP | 3240087 | A1 | 01 November 2017 |
| | | | | EP | 3240087 | B1 | 19 June 2019 |
| | | | | JP | 2017-199678 | A | 02 November 2017 |
| | | | | JP | 7005090 | B2 | 21 January 2022 |
| | | | | US | 10847799 | B2 | 24 November 2020 |
| | | | | US | 2017-0317352 | A1 | 02 November 2017 |
| | | | | US | 2021-0083291 | A1 | 18 March 2021 |

Form PCT/ISA/210 (patent family annex) (July 2022)

**EP 4 439 738 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220176315